Europäisches Patentamt

European Patent Office

Office européen des brevets

(19)

(11) Veröffentlichungsnummer : **0 048 801**

**B1**

# (12) EUROPÄISCHE PATENTSCHRIFT

(45) Veröffentlichungstag der Patentschrift :
18.09.85

(21) Anmeldenummer : 81105894.0

(22) Anmeldetag : 25.07.81

(51) Int. Cl.⁴ : **C 08 G 73/00, C 07 D263/12**

(54) **Verfahren zur Herstellung von 2-(C₁- bis C₃-Alkyl)-delta-2-oxazolin-Copolymeren.**

(30) Priorität : 25.09.80 DE 3036119

(43) Veröffentlichungstag der Anmeldung :
07.04.82 Patentblatt 82/14

(45) Bekanntmachung des Hinweises auf die Patenterteilung : 18.09.85 Patentblatt 85/38

(84) Benannte Vertragsstaaten :
BE DE FR GB IT NL SE

(56) Entgegenhaltungen :
DE-A- 1 445 621
DE-B- 1 263 006
DE-C- 1 263 300
ANGEWANDTE CHEMIE, Band 78, Nr. 20, 15. Oktober
1966, Weinheim/Bergstr. W. SEELIGER et al. "Neuere
Synthesen und Reaktionen cyclischer Imidsäureester" Seiten 913 bis 927

(73) Patentinhaber : CHEMISCHE WERKE HÜLS AG
Postfach 1320
D-4370 Marl 1 (DE)

(72) Erfinder : Sunder-Plassmann, Paul, Dr.
Langehegge 149
D-4370 Marl (DE)

EP 0 048 801 B1

## Beschreibung

Es ist seit langem bekannt, 2-($C_1$- bis $C_3$-Alkyl)-$\Delta^2$-oxazolin-Copolymere entsprechend dem Oberbegriff des Patentanspruchs, im folgenden Polyoxazoline genannt, herzustellen (Chem. Reviews *71* (1971) 496).

Für die Verwendung der Polyoxazoline im technischen Maßstab ist es erforderlich, daß diese in ihren Eigenschaften reproduzierbar erhalten werden können. Für manche Verwendungszwecke, beispielsweise für die Verwendung als Co-Suspensionsstabilisator im Verfahren zur Herstellung von Vinylchloridharzen (S-PVC), ist die Viskositätszahl, auch J-Wert genannt, eine solche wichtige Eigenschaft.

Polyoxazoline mit J-Werten im Bereich von 35 bis 70 ml/g hat man beispielsweise durch diskontinuierliche Polymerisation erhalten, indem man in Abwesenheit von Lösemitteln in der Endphase der Polymerisation 15 h bei 170 °C erhitzt hat (DE-C-12 63 300). Die erhaltenen Polyoxazoline sind charakterisiert durch einen vergleichsweise hohen Verzweigungsgrad (J. Macromol. Sci. A9 (1975) 703 ff.).

Ähnliche Produkte hat man durch Polymerisation bei Temperaturen bis ca. 200 °C bei zum Teil erheblich verkürzten Polymerisationszeiten erhalten.

Man hat auch Polyoxazoline im genannten Bereich der Lösungsviskosität dadurch erhalten, daß man durch den Zusatz einer geringen Menge eines Alkylen- oder Arylen-bis-oxazolins als Comonomer zum Polymerisationsansatz eine gezielte Verzweigung bzw. partielle Vernetzung herbeigeführt hat (Angew. Chem. *78* (1966) 920, rechte Spalte, Abs. 5).

Es ist bekannt, daß kationenaktive Katalysatoren, deren Anionen stark nucleophil sind, kettenabbrechend wirken. Sie kommen daher für die Herstellung von Polyoxazolinen mit hohen J-Werten nicht in Betracht. In Betracht kommen dagegen nur solche kationenaktive Katalysatoren, deren Anionen eine hinreichend geringe Nucleophilie aufweisen (Angew. Chem. *78* (1966), 919, rechte Spalte, Abs. 3. 4. 1).

Es ist auch bekannt, daß nucleophile Verunreinigungen im Polymerisationsansatz, wie Wasser, Amine und Alkohole, kettenabbrechend wirken, so daß die Herstellung von Polyoxazolinen mit hohen J-Werten erschwert oder sogar unmöglich gemacht wird. Die Reinigung der Monomeren wird daher als notwendig angesehen.

So hat man die Monomeren mit Säurechloriden oder Säureanhydriden behandelt und anschließend fraktioniert destilliert (DE-A-14 45 621).

Als Mangel erwiesen sich die nich unbeachtlichen Verluste an Monomer. Außerdem waren die so gereinigten Monomeren nicht frei von neu eingeschleppten, kettenabbrechend wirkenden Verunreinigungen.

Es ist auch schon vorgeschlagen worden, die Monomeren mit Diisocyanaten zu behandeln und dann fraktioniert zu destillieren (Angew. Chem. *78* (1966) 920, rechte Spalte, Abs. 2). Diese Verfahrensweise zur Monomerreinigung hat sich jedoch bei den 2-($C_1$- bis $C_3$-Alkyl)-$\Delta^2$-oxazolinen nicht generell durchsetzen können, da diese mit Ausnahme des 2-Isopropyl-$\Delta^2$-oxazolins gegenüber Isocyanaten nicht inert sind.

Die Monomeren hat man auch schon durch fraktionierte Destillation nach Zugabe eines inerten, organischen Lösemittels als Schleppmittel zur azeotrop destillativen Abtrennung von Wasser gereinigt (DE-B-12 63 006).

Bei der Herstellung der Polyoxazoline im technischen Maßstab hat man sich bei der Reinigung der eingesetzten Monomeren in der Regel mit einer fraktionierten Destillation in Abwesenheit von Schleppmitteln begnügt (Angew. Chem. *78* (1966) 920, rechte Spalte, Abs. 2). Die oben geschilderten Mängel blieben jedoch im wesentlichen bestehen.

Es ist weiterhin bekannt, daß man Polyoxazoline in Gegenwart von inerten, organischen Lösemitteln herstellen kann.

Nach geschilderten Stand der Technik kann man zwar Polyoxazoline mit J-Werten im Bereich von 35 bis 70 ml/g erhalten. Die J-Werte sind jedoch bei der Herstellung der Polyoxazoline im technischen Maßstab im Hinblick auf ihre Verwendung nicht hinreichend von Ansatz zu Ansatz reproduzierbar.

Es wird angenommen, daß bei der Herstellung der Polyoxazoline mit den Verfahren des geschilderten Standes der Technik Verzweigungsreaktionen in unkontrolliertem Maße stattfinden. Die erhaltenen Polyoxazoline sind demnach durch einen vergleichsweise hohen Verzweigungsgrad, der von Ansatz zu Ansatz erheblich schwanken kann, charakterisiert.

Die Aufgabe der Erfindung ist es, ein Verfahren zur Herstellung von Polyoxazolinen mit einem von Ansatz leicht reproduzierbaren J-Wert im Bereich von 35 bis 70 ml/g bereitzustellen.

Der Gegenstand der Erfindung ist somit ein Verfahren zur Herstellung von 2-($C_1$- bis $C_3$-Alkyl)-$\Delta^2$-oxazolin-Copolymeren aus > 50 Mol-% 2-(Isopropyl- und/oder n-Propyl)-$\Delta^2$-oxazolin und < 50 Mol-% 2-(Methyl- und/oder Ethyl)-$\Delta^2$-oxazolin mit einer von Ansatz zu Ansatz leicht reproduzierbaren Viskositätszahl im Bereich von 35 bis 70 ml/g.

Das Verfahren besteht darin, daß die entsprechenden Monomeren in Gegenwart eines kationenaktien Katalysators mit einem Anion geringer Nucleophilie bei erhöhter Temperatur polymerisiert werden, wobei die folgenden zusätzlichen Merkmale zu beachten sind :

a.1. Einsatz von Monomeren, welche < 200 mg Wasser/l und < 0,003 Gew.-% basischen Stickstoff enthalten, wobei die Monomeren durch folgenden Reinigungsoperationen erhalten sind :

a.1.1 fraktionierte Destillation, die gegebenenfalls nach Zugabe eines als Schleppmittel der Verunreinigungen wirkenden, bei Normaldruck wenigstens 15 °C niedriger siedenden, inerten, organischen Lösemittels und gegebenenfalls unter vermindertem Druck durchgeführt wird (für alle Monomere anwendbare Methode) ; oder

a.1.2 Zugabe eines als Schleppmittel der Verunreinigungen wirkenden, bei Normaldruck wenigstens 15 °C niedriger siedenden, inerten, organischen Lösemittels und weitgehende destillative Abtrennung desselben, anschließende Zugabe von 0,01 bis 2 Gew.-T., bezogen auf 100 Vol-T. des Monomers, eines aromatischen Isocyanats, welches über 100 °C/7 mbar siedet, zum Sumpfprodukt und anschließende fraktionierte Destillation unter vermindertem Druck (nur für 2-Isopropyl-$\Delta^2$-oxazolin anwendbare Methode) ;

a.2 anschließende Behandlung mit Silicagel oder neutralem Aluminiumoxid, und

a.3 gegebenenfalls Trocknen über Molekularsieb der Porenweite 0,3 oder 0,4 nm ;

b.1 diskontinuierliche Polymerisation in einem Rührreaktor, der mit einem ausreichend dimensionierten Rückflußkühler zur Abführung der Polymerisationswärme durch Verdampfungskühlung ausgerüstet ist,

b.2 im Temperaturbereich von 120 bis 175 °C, wobei die Temperatur nach Umsatz von 90 Mol-% der Monomeren 165 °C nicht überschreitet, und

b.3 Stoppen der Polymerisation nach einem Umsatz der Monomeren im Bereich von 96 bis 99,5 Mol-% auf übliche Weise.

Unter basischem Stickstoff wird titrierbarer Stickstoff verstanden, der in Verunreinigungen wie Aminen oder Ammoniak vorliegt.

Unter der Behandlung der Monomeren mit Silicagel oder neutralem Aluminiumoxid wird beispielsweise das Rühren der Monomeren zusammen mit einer ausreichenden oder überschüssigen Menge des Adsorbens, dem sich die übliche Abtrennung durch Dekantation und Filtration anschließt, oder das besonders vorteilhafte Durchlaufen einer Säule des Adsorbens verstanden.

Im Falle des 2-Isopropyl-$\Delta^2$-oxazolins setzt man ein solches ein, welches unter Beachtung der Merkmale a.1.1, a.2 und a.3 oder unter Beachtung der Merkmale a.1.2 bis a.3 des Verfahrens gereinigt wurde.

Bei einer bevorzugten Ausführungsform des anmeldungsgemäßen Verfahrens setzt man solche Monomere ein, welche weniger als 100 mg Wasser/l und weniger als 0,001 5, insbesondere weniger als 0,001 Gew.% basischen Stickstoff enthalten.

Selbstverständlich sind bei den zur Polymerisation eingesetzten Lösemitteln ähnlich hohe Anforderungen bezüglich Reinheit zu erfüllen wie bei den Monomeren.

Beispiele für als Schleppmittel geeignete, inerte, organische Lösemittel sind Benzol, Toluol und Chlorbenzol.

Ein Beispiel für ein geeignetes aromatisches Isocyanat ist Diphenylmethan-4,4'-diisocyanat (MDI).

Der Rührreaktor ist mit einem wirksamen Rührer, beispielsweise einem Wendelrührer, wie er üblicherweise zum Rühren viskoser Reaktionsmischungen eingesetzt wird, ausgerüstet.

Die Polymerisation wird vorzugsweise in Gegenwart von 10 bis 50 Vol.%, bezogen auf das Monomerengemisch, eines inerten, organischen Lösemittels durchgeführt.

Geeignete inerte, organische Lösemittel, in deren Gegenwart die Polymerisation durchgeführt werden kann, sind beispielsweise Toluol, Ethylbenzol, ortho-, meta- und para-Xylol, Chlorbenzol, Dimethylformamid, Dimethylacetamid, N-Methylpyrrolidon und ihre Gemische.

Geeignete kationenaktive Katalysatoren mit einem Anion hinreichend geringer Nucleophilie sind beispielsweise 70- bis 80-gewichtsprozentige, wäßrige Perchlorsäure. Diethylsulfat, Benzol-, para-Toluol-, Trifluormethan- und Perfluorbutan-sulfonsäure und ihre Alkylester, und daraus in üblicher Weise durch Adduktbildung mit 2-Aryl und 2-Alkyl-$\Delta^2$-oxazolinen herstellbare Katalysatoren sowie ihre Gemische.

Die Katalysatormenge richtet sich nach dem gewünschten J-Wert des herzustellenden Polyoxazolins und kann leicht durch orientierende Versuche ermittelt werden. Sie beträgt im allgemeinen 0,025 bis 0,1 Mol-%, bezogen auf das Monomerengemisch.

Der Katalysator wird der Reaktionsmischung in der Regel bei Raumtemperatur als Lösung in einem inerten, organischen Lösemittel, welches aus den oben genannten Lösemitteln, in deren Gegenwart die Polymerisation durchgeführt werden kann, ausgewählt wird, zugegeben.

Bei der Herstellung der Katalysatorlösung ist zu beachten, daß Toluol, Ethylbenzol und die isomeren Xylole gegenüber Trifluormethan- und Perfluorbutansulfonsäure nicht inert sind.

In der Regel geht man so vor, daß man, nachdem die Polymerisation bei ca. 120 °C angesprungen ist, die Polymerisationstemperatur bei geeigneter Wahl des Gesamtdruckes auf den gewünschten Wert ansteigen läßt, so daß der gewünschte Umsatz der Monomeren nach weniger als 2 h erreicht ist. Dann stoppt man in üblicher Weise.

Die Polymerisation wird nach einem Umsatz der Monomeren im Bereich von 96 bis 99,5 Mol-%, vorzugsweise 98 bis 99,5 Mol-%, gestoppt.

Es wird angenommen, daß die nach dem Verfahren der Anmeldung hergestellten Polyoxazoline Makromoleküle aufweisen, welche linear oder in geringem Maße verzweigt sind.

Die erfindungsgemäß herstellbaren Polyoxazoline eignen sich für verschiedene Verwendungszwecke (Chem. Reviews 71 (1971) 500, linke Spalte). Sie eignen sich besonders als Co-Suspensionsstabilisator im Verfahren zur Herstellung von Vinylchloridharzen (S-PVC).

Die nachfolgenden Beispiele dienen zur Erläuterung der Erfindung.

Der basische Stickstoff in den Monomeren und gegebenenfalls auch in den bei der Polymerisation eingesetzten Lösemitteln wird durch potentiografische Titration bei Raumtemperatur mit 0,1 n $HClO_4$ in Eisessig bestimmt.

Der Wassergehalt in den Monomeren und in den bei der Polymerisation eingesetzten Lösemitteln wird nach der Methode von Karl Fischer im Aquacounter (Meßwert 2 min nach dem Einspritzen der Probe) bestimmt.

### Reinigung der Monomeren und Lösemittel

1 500 ml Isopropyloxazolin, welches aus der Gasphasendehydratisierung von N-(2-Hydroxy-ethyl)-isobuttersäureamid stammt (0,15 Gew.% basischer Stickstoff ; 230 mg Wasser/l), werden mit 100 ml Toluol versetzt. Bei Normaldruck wid ein Vorlauf von 100 ml abdestilliert. Nach dem Abkühlen auf ca. 80 °C werden 10 g MDI zugesetzt. Bei 130 mbar wird fraktioniert destilliert, wobei das Produkt bei 80 °C übergeht (< 0,001 Gew.% basischer Stickstoff ; 98 mg Wasser/l).

Das Produkt wird über eine Säule eines handelsüblichen, zur Säulenchromatographie geeigneten, neutralen Aluminiumoxids der Aktivität I gegeben und danach über einem Molekularsieb der Porenweite 0,4 nm aufbewahrt. Nach zweitägiger, stationärer Trocknung beträgt der Wassergehalt < 50 mg Wasser/l. Der Gehalt an basischem Stickstoff beträgt < 0,001 Gew.%.

Methyloxazolin, welches durch Umsetzung von Ethanolamin mit Acetonitril erhalten wird (H. Witte, W. Seeliger, Liebigs Ann. Chem. (1974) 996 ; 0,001 3 Gew.% basischer Stickstoff ; 880 mg Wasser/l) wird mit Benzol versetzt und bei Normaldruck fraktioniert destilliert. Die weiteren Operationen wie oben liefern ein Produkt mit < 0,001 Gew.% basischem Stickstoff und < 50 mg Wasser/l.

Ethyloxazolin, welches durch Umsetzung von Ethanolamin mit Propionitril erhalten wird (loc. cit. : 0,022 Gew.% basischer Stickstoff ; > 1 000 mg Wasser/l) wird mit Benzol versetzt und nach Abnahme eines Vorlaufs bei Normaldruck unter vermindertem Druck fraktioniert destilliert.

Die weiteren Operationen wie oben liefern ein Produkt ähnlich hoher Reinheit.

N-Methylpyrrolidon (NMP, 0,001 Gew.% basischer Stickstoff ; ca. 1,5 Gew.% Wasser) wird mit Toluol versetzt und nach Abnahme eines Vorlaufs bei Normaldruck bei 133 °C/123 mbar destilliert. Die weiteren Operationen wie oben liefern ein Produkt ähnlich hoher Reinheit.

Chlorbenzol wird analog dem Isopropyloxazolin behandelt. Es wird ein Produkt mit ähnlich hoher Reinheit erhalten.

### Beispiel 6 (Tabelle 1)

In eine trockene 2 l-Apparatur, welche mit einer an einen Thermostaten angeschlossenen Mantelheizung, einem Weithals-Intensivrückflußkühler, einem Wendelrührer (Breite der Wendel/Reaktorinnenradius = 0,3), einem Temperaturmeßfühler im unteren Ende der Rührwelle, sowie mit einem Temperaturschreiber und einem Druckregler ausgestattet ist, werden unter trockenem Stickstoff bei Raumtemperatur

    500 ml Isopropyloxazolin,
    100 ml Methyloxazolin,
    175 ml Chlorbenzol,
     25 ml NMP und unter Rühren
    27 ml einer 0,1 molaren Lösung von Perfluorbutansulfonsäure (PFBS) in NMP gegeben ( ≙ insgesamt 38 Vol.% Lösemittel, bezogen auf das Monomerengemisch).

Unter den in Tabelle 1 angegebenen Bedingungen wird polymerisiert. Nach Beendigung der Polymerisation werden bei Normaldruck 700 ml trockenes Isopropanol zugegeben und die erhaltene, viskose Lösung bei 85 °C in eine Apparatur gedrückt, in welcher 3 l Hexan vorgelegt sind.

Nach Zugabe von 1 l Hexan läßt man das gefällte Produkt absitzen. Die obere Lösemittelphase wird abgetrennt und das Produkt noch zweimal in jeweils 500 ml Methylenchlorid gelöst und durch Zugabe von jeweils 2 l Hexan gefällt. Das abgetrennte Produkt wird bei 60 °C/2 mbar getrocknet.

Ausbeute : 460 g ≙ 80 % der Theorie.

Die Produkte der Beispiele 1 bis 5 werden ähnlich wie das Produkt in Beispiel 6 unter Beachtung der in der Tabelle 1 angegebenen Bedingungen erhalten.

Die Beispiele 2 und 3, deren Produkte unter praktisch gleichen Bedingungen erhalten werden, demonstrieren die gute Reproduzierbarkeit des J-Wertes.

### (Siehe Tabelle 1 Seite 5 f.)

Tabelle 1

| Bei-spiel | R- in [structure] | Kataly-sator | Zeit [min] | Temp., °C (Temp. im Heizmantel in Klammern) | | | J-Wert [ml/g] | 200 ml Lösemittel[1]/600 ml Monomer; 0,05 Mol.% Kata-lysator, bezogen auf Mono-mer; 1,5 bar Gesamtdruck; Temp. im Heizmantel: 150°C; falls nicht anders angegeben |
|---|---|---|---|---|---|---|---|---|
| | | | | Anfang | Maximum | Ende | | |
| 1 | Isopro-pyl- + 10 Mol-% Ethyl- | PTSM[2] | 150 | 128 (135) | 140 (140) | 140 (140) | 40 | 1 bar Gesamtdruck; para-Xylol |
| 2 | Isopro-pyl- + 22 Mol-% Methyl- | PTSM | 85 | 120 | 152 | 150 | 52[4] | para-Xylol; im folgenden jeweils 27 ml Katalysator-lösung |
| 3 | " | PTSM | 80 | 120 | 155 | 150 | 52[4] | " " " |
| 4 | " | PTSM | 90 | 120 | 162 | 154 | 61 | 150 ml para-Xylol, 50 ml NMP |
| 5 | " | PFBS[3] | 75 | 120 | 159 | 153 | 56 | 175 ml para-Xylol, 25 ml NMP |
| 6 | " | PFBS | 75 | 120 | 160[5] | 154 | 61 | 175 ml Chlorbenzol, 25 ml NMP |

[1]) Darin ist die Katalysatorlösung nicht enthalten.
[2]) Para-Toluolsulfonsäuremethylester, 0,1 molar in para-Xylol.
[3]) 0,1 molar in NMP.
[4]) Die zur Polymerisation eingesetzten Monomeren stammen aus verschiedenen Reinigungsansätzen.
[5]) Nach 40 Min.

0 048 801

**0 048 801**

## Patentanspruch

Verfahren zur Herstellung von 2-($C_1$- bis $C_3$-Alkyl)-$\Delta^2$-oxazolin-Copolymeren aus > 50 Mol-% 2-Isopropyl- und/oder n-Propyl)-$\Delta^2$-oxazolin und < 50 Mol-% 2-(Methyl- und/oder Ethyl)-$\Delta^2$-oxazolin mit einer von Ansatz zu Ansatz leicht reproduzierbaren Viskositätszahl im Bereich von 35 bis 70 ml/g, gemessen bei 25 °C in einem Isopropanol/Wasser-Gemisch (50 Vol.-% Isopropanol) bei einer Konzentration von 0,5 % (Gew./Vol. der Lösung), durch diskontinuierliche Polymerisation der entsprechenden Monomeren in einem Rührreaktor in Gegenwart eines kationenaktiven Katalysators mit einem Anion geringer Nucleophilie, so daß eine Viskositätszahl von 35 bis 70 ml/g erreicht werden kann, bei erhöhter Temperatur,
gekennzeichnet durch folgende Merkmale :

a.1 Einsatz von Monomeren, welche < 200 mg Wasser/l und < 0,003 Gew-% basischen, titrierbaren Stickstoff (Verunreinigungen) enthalten, wobei die Monomeren durch folgende Reinigungsoperationen erhalten sind :

a.1.1. fraktionierte Destillation, die gegebenenfalls nach Zugabe eines als Schleppmittel der Verunreinigungen wirkenden, bei Normaldruck ≥ 15 °C niedriger siedenden, inerten, organischen Lösemittels und gegebenenfalls unter vermindertem Druck durchgeführt wird (für alle Monomere anwendbare Methode) ; oder

a.1.2 Zugabe eines als Schleppmittel der Verunreinigungen wirkenden, bei Normaldruck ≥ 15 °C niedriger siedenden, inerten, organischen Lösemittels und weitgehende destillative Abtrennung desselben, anschließende Zugabe von 0,01 bis 2 Gew. T., bezogen auf 100 Vol. T. des Monomers, eines aromatischen Isocyanats, welches über 100 °C/7 mbar siedet, zum Sumpfprodukt und anschließende fraktionierte Destillation unter vermindertem Druck (nur für 2-Isopropyl-$\Delta^2$-oxazolin anwendbare Methode) ;

a.2 anschließende Behandlung mit Silicagel oder neutralem Aluminiumoxid, und

a.3 gegebenenfalls Trocknen über Molekularsieb der Porenweite 0,3 oder 0,4 nm ;

b.1 diskontinuierliche Polymerisation in einem Rührreaktor, der mit einem ausreichend dimensionierten Rückflußkühler zur Abführung der Polymerisationswärme durch Verdampfungskühlung ausgerüstet ist,

b.2 im Temperaturbereich von 120 bis 175 °C, wobei die Temperatur nach Umsatz von 90 Mol-% der Monomeren 165 °C nicht überschreitet, und

b.3 Stoppen der Polymerisation nach einem Umsatz der Monomeren von 96 bis 99,5 Mol-% auf übliche Weise.

## Claim

A process for the production of a 2-($C_1$-$C_3$ alkyl)-$\Delta^2$-oxazoline copolymer from more than 50 mol% of 2-(isopropyl and/or n-propyl)-$\Delta^2$-oxazoline and less than 50 mol% of 2-(methyl and/or ethyl)-$\Delta^2$-oxazoline, the copolymer having a viscosity number which is readily reproducible from batch to batch and is in the range from 35 to 70 ml/g, measured at 25 °C in an isopropanol/water mixture (50 vol% isopropanol) at a concentration of 0.5 % (wt./vol. of solution), by discontinuous polymerisation of the corresponding monomers in a stirred reactor at elevated temperature in the presence of a cation-active catalyst with an anion of low nucleophilicity so that a viscosity number of 35 to 70 ml/g can be achieved, characterised by the following features :

a.1 introduction of monomers which contain less than 200 mg of water per litre and less than 0.003 % by weight of basic, titratable nitrogen (impurities), the monomers being obtained by the following purifying operations, namely

a.1.1 fractional distillation which is carried out optionally after addition of an inert organic solvent boiling 15 °C or more lower under standard pressure and acting as an entraining agent for impurities and is carried out optionally at reduced pressure (method usable for all monomers) ; or

a.1.2 addition of an inert organic solvent boiling 15 °C or more lower at standard pressure and acting as an entraining agent for impurities and extensive distillative separation of the same, subsequent addition of 0.01 to 2 parts by weight, based on 100 parts by volume of the monomer, of an aromatic isocyanate which boils at over 100 °C at 7 mbar to the bottoms product and subsequent fractional distillation under reduced pressure (method usable only for 2-isopropyl-$\Delta^2$-oxazoline) ;

a.2 subsequent treatment with silica gel or neutral aluminium oxide, and

a.3 optional drying over a molecular sieve with a pore size of 0.3 or 0.4 nm ;

b.1 discontinuous polymerisation in a stirred reactor which is equipped with a reflux cooler of a sufficient size for the removal of the heat of polymerisation by evaporative cooling,

b.2 in the temperature range of 120 to 175 °C, provided that the temperature does not exceed 165 °C after conversion of 90 mol% of the monomers, and

b.3 termination of the polymerisation in a conventional manner after a conversion of 96 to 99.5 mol% of the monomers.

## Revendication

Procédé de préparation de copolymères de 2-(alkyl- en $C_1$ à $C_3$)-$\Delta^2$-oxazoline en partant de plus de 50 mol% de 2-(isopropyl et/ou n-propyl)-$\Delta^2$-oxazoline et de moins de 50 mol% de 2-(méthyl et/ou éthyl)-$\Delta^2$-oxazoline ayant un indice de viscosité facilement reproductible d'une charge à l'autre, dans la gamme de 35 à 70 ml/g, mesuré à 25 °C dans un mélange d'isopropanol et d'eau (50 % en volume d'isopropanol) à une concentration de 0,5 % (en poids/volume de la solution), par polymérisation discontinue des monomères correspondants dans un réacteur à agitation en présence d'un catalyseur actif cationiquement, contenant un anion de faible nucléophilie, de sorte que l'on peut atteindre un indice de viscosité de 35 à 70 ml/g, à température élevée, caractérisé par les points suivants :

a.1 Utilisation de monomères qui contiennent moins de 200 mg d'eau par litre et moins de 0,003 % en poids d'azote basique titrable (impuretés), les monomères ayant été obtenus par les opérations de purification suivantes :

a.1.1 Distillation fractionnée, que l'on effectue éventuellement après addition d'un solvant organique inerte bouillant au moins 15 °C plus bas à la pression normale, jouant le rôle d'entraîneur des impuretés, et éventuellement sous pression réduite (mode opératoire applicable pour tous les monomères) ; ou

a.1.2 Addition d'un solvant organique inerte bouillant au moins 15 °C plus bas à la pression normale, jouant le rôle d'entraîneur des impuretés et séparation poussée de celui-ci par distillation, addition subséquente au produit de queue de 0,01 à 2 parties en poids, par 100 parties en volume du monomère, d'un isocyanate aromatique qui bout au-dessus de 100 °C/7 mbar, et ensuite distillation fractionnée sous pression réduite (mode opératoire applicable seulement pour la 2-isopropyl-$\Delta^2$-oxazoline) ;

a.2 ensuite traitement par le gel de silice ou par l'oxyde d'aluminium neutre, et

a.3 éventuellement séchage sur un tamis moléculaire d'une largeur de pores de 0,3 ou 0,4 nm ;

b.1 polymérisation discontinue dans un réacteur à agitation qui est équipé d'un réfrigérant à reflux de dimension suffisante pour dissiper la chaleur de polymérisation par refroidissement par évaporation,

b.2 dans l'intervalle de température de 120 à 175 °C, la température, après conversion de 90 mol% des monomères, ne dépassent pas 165 °C, et

b.3 arrêt de la polymérisation, après une conversion de monomères de 96 à 99,5 mol%, de façon usuelle.